## Europäisches Patentamt

## European Patent Office

## Office européen des brevets

(11) Veröffentlichungsnummer: **0 232 855**
**B1**

(12) **EUROPÄISCHE PATENTSCHRIFT**

(45) Veröffentlichungstag der Patentschrift: **10.10.90**

(51) Int. Cl.⁵: **G 01 M 17/02**

(21) Anmeldenummer: **87101538.4**

(22) Anmeldetag: **05.02.87**

(54) Verfahren und Einrichtung zur Prüfung von Schienenfahrzeugrädern.

(30) Priorität: **10.02.86 DE 3604186**

(43) Veröffentlichungstag der Anmeldung:
**19.08.87 Patentblatt 87/34**

(45) Bekanntmachung des Hinweises auf die
Patenterteilung:
**10.10.90 Patentblatt 90/41**

(84) Benannte Vertragsstaaten:
**AT BE CH DE ES FR GB GR IT LI LU NL SE**

(56) Entgegenhaltungen:
**EP-A-0 063 245**
**DE-A-2 601 259**

(73) Patentinhaber: **FRAUNHOFER-GESELLSCHAFT ZUR FÖRDERUNG DER ANGEWANDTEN FORSCHUNG E.V.**
**Leonrodstrasse 54**
**D-8000 München 19 (DE)**

(72) Erfinder: **Fischer, Gerhard, Dipl.-Ing.**
**Menzelweg 6**
**D-6100 Darmstadt (DE)**
Erfinder: **Grubisic, Vatroslav, Dr.-Ing.**
**Zum Stetteritz 1**
**D-6107 Reinheim 4 (DE)**

(74) Vertreter: **Kraus, Walter, Dr. et al**
**Patentanwälte Kraus, Weisert & Partner**
**Thomas-Wimmer-Ring 15**
**D-8000 München 22 (DE)**

Courier Press, Leamington Spa, England.

**Beschreibung**

Die Erfindung betrifft ein Verfahren zur Prüfung von Schienenfahrzeugrädern, bei dem ein gesamter Schienenfahrzeugradsatz, der mindestens eine Schienenfahrzeugachse und wenigstens an deren Enden angebrachte Schienenfahrzeugräder umfaßt, durch Einleiten von Radial- und/oder Axialkräften in den Radaufstandspunkt geprüft wird, wobei die Radialkräfte wahlweise über den Radachsenbereich des einen der beiden Schienenfahrzeugräder oder beider Schienenfahrzeugräder eingeleitet werden.

Außerdem betrifft die Erfindung eine Einrichtung zur Prüfung von Schienenfahrzeugrädern, bei der ein gesamter Schienenfahrzeugradsatz, der mindestens eine Schienenfahrzeugachse und wenigstens an deren Enden angebrachte Schienenfahrzeugräder umfaßt, durch Einleiten von Radial- und/oder Axialkräften in den Radaufstandspunkt geprüft wird, wobei die Radialkräfte wahlweise über den Radachsenbereich des einen der beiden Schienenfahrzeugräder oder beider Schienenfahrzeugräder eingeleitet werden, umfassend:

(a) eine Halterungseinrichtung zum drehbaren Befestigen des Schienenfahrzeugradsatzes;

(b) eine mit dem Radachsenbereich des einen Schienenfahrzeugrads verbundene erste Radialbelastungseinrichtung und eine mit dem Radachsenbereich des anderen Schienenfahrzeugrads verbundene zweite Radialbelastungseinrichtung; und

(c) eine Axialbelastungseinrichtung zum Aufbringen einer Axialkraft.

Nach dem Stande der Technik kann die Prüfung von Schienenfahrzeugrädern mittels klassischer Umlaufbiegeversuchsständen erfolgen, in denen das Schienenfahrzeugrad am Umfang fest eingespannt und eine auf der Achse dieses Schienenfahrzeugrads sitzende Unwuchtmasse rotieren gelassen wird, so daß auf diese Weise ein umlaufendes Biegemoment erzeugt wird. Nachteilig an den Umlaufbiegeversuchsständen ist es insbesondere, daß nur Biegemomente in Form von Axialkräften simuliert werden und keine Simulation von Biegemomenten durch Radialbelastungen erfolgt. Darüber hinaus werden durch die feste Einspannung des Schienenfahrzeugrads am Radumfang und die dadurch bewirkten Verformungsbehinderungen keine betriebsähnlichen Beanspruchungen in der Schienenfahrzeugradscheibe erzeugt. Außerdem wird nur das Schienenfahrzeugrad zusammen mit einer Versuchsachse geprüft, aber es erfolgt keine Prüfung eines gesamten Schienenfahrzeugradsatzes, der zwei Schienenfahrzeugräder und eine dieselben verbindende Original-Fahrzeugachse umfaßt.

Zwar gibt es Resonanzprüfstände, in denen ein gesamter Schienenfahrzeugradsatz geprüft werden kann, jedoch erfolgt in derartigen Resonanzprüfständen kein Umlauf der Schienenfahrzeugräder, so daß nur ein Querschnitt des Schienenfahrzeugradsatzes geprüft wird und infolgedessen die Prüfung nicht unter betriebsähnlichen Belastungsbedingungen stattfindet.

Ein Verfahren und eine Einrichtung zur Prüfung von Schienenfahrzeugrädern unter betriebsähnlichen Belastungsbedinungen ist aus der deutschen Patentschrift 2 601 259 bekannt. In dieser Einrichtung werden zwar die im Fahrbetrieb auftretenden Radial- und Axialkräfte mit Hilfe servohydraulischer Belastungszylinder auf das Schienenfahrzeugrad so ausgeübt, daß die Krafteinleitung am Radaufstandspunkt erfolgt. Jedoch kann damit nur eine Halbachse mit dem zugehörigen Schienenfahrzeugrad geprüft werden, so daß bestenfalls das Schienenfahrzeugrad ein Originalrad sein kann, während die Originalachse in dieser Einrichtung nicht verwendet werden kann, sondern es erforderlich ist, als Halbachse eine speziell angefertigte Versuchsachse zu benutzen, und es kann kein dem Originalschienenfahrzeugradsatz entsprechender Biegemomentenverlauf simuliert werden, so daß eine Prüfung von vollständigen Schienenfahrzeugradsätzen unter betriebsähnlichen Belastungsbedingungen nicht möglich ist. Abgesehen hiervon wird in der Einrichtung nach der deutschen Patentschrift 2 601 259 die Axialbelastung auf das Schienenfahrzeugrad über ein Kippen der Trommel bewirkt, wodurch eine Axialbelastung immer in Verbindung mit einer Radialbelastungskomponente erzeugt wird. Außerdem ergibt sich dadurch, daß die Trommel gekippt werden muß, ein komplizierter Aufbau der gesamten Einrichtung, der insbesondere eine Simulation einer höheren Geschwindigkeit von über 100 km/h ausschließt.

Außerdem ist aus der europäischen Patentschrift 63 245 der Anmelderin zwar eine Einrichtung zur Prüfung von Fahrzeugrädern, Radnaben, Radlagern und Radschrauben unter betriebsähnlichen Belastungsbedingungen bekannt, wobei die Radkräfte ebenfalls über eine umlaufende Trommel und über darin angebrachte Anlaufringe aufgebracht werden und zur Einleitung der bei Kurvenfahrt vorhandenen axialen und radialen Radkräfte über den Radaufstandspunkt eine Schrägstellung des Fahrzeugrads bewirkt wird. Diese Einrichtung, die für die Prüfung von Straßenfahrzeugrädern konzipiert ist, also von Fahrzeugrädern mit elastisch deformierbaren Reifen, hat zwar den Vorteil, daß sich die Axialkraft über die Halterungseinrichtung für das Fahrzeugrad aufbringen läßt, so daß kein Kippen der Trommel erforderlich ist, jedoch ist die in der europäischen Patentschrift 63 245 beschriebene Einrichtung weder für Schienenfahrzeugräder geeignet, noch ist es mit dieser Einrichtung möglich, ganze Radsätze zu prüfen, vielmehr kann immer nur ein einziges Rad unter Verwendung einer Versuchshalbachse geprüft werden, und es ist mit dieser Einrichtung nicht möglich, den einem Originalradsatz entsprechenden Biegemomentenverlauf zu simulieren.

Aus der deutschen Offenlegungsschrift 25 51 067 ist eine Vorrichtung zum Testen von Reifen bekannt, die folgendes umfaßt: einen Rahmen für die Anbringung an einem Kraftfahrzeug, einen Meßträger für die Befestigung im wesentlichen parallel zu der Querachse eines Kraftfahrzeugs, an dem die Vorrichtung während des Gebrauchs angebracht werden soll, wobei der Träger an einem Ende schwenkbar an dem Rahmen befestigt ist, so daß der Träger eine Schwenkbewegung in einer horizontalen und vertikalen Ebene durchführen kann, eine Einrichtung zur Befestigung eines zu testenden Reifens an dem Ende des Meßträgers, das von der Schwenkbefestigung entfernt ist, eine Anordnung zur Ausübung einer Belastung auf den Meßträger, wodurch der zu testende Reifen belastet wird, und wenigstens einen Kraftwandler, um die durch den Reifen beim Test auf den Träger ausgeübte Kraft zu messen. Diese Vorrichtung ist nicht für die Prüfung von Schienenfahrzeugradsätzen geeignet, sondern nur zum Testen von Gummireifen, die direkt an einem Personenkraftwagen angebracht werden, um Einflüsse von unterschiedlichen Sturz- und Schwimmwinkeln zu ermitteln.

Auch aus der US-Patentschrift 4 479 381 ist eine Vorrichtung zur Untersuchung von Gummireifen von Personenkraftwagen bekannt, und zwar zur optischen Ermittlung von dynamischen Ungleichförmigkeiten. Diese Vorrichtung ist ebensowenig wie die Vorrichtung nach der vorgenannten deutschen Offenlegungsschrift 25 51 067 für die Prüfung von Schienenfahrzeugradsätzen geeignet.

Weiterhin sind ein Verfahren und eine Einrichtung der eingangs genannten Art aus der DDR-Patentschrift 73 893 bekannt, und zwar handelt es sich hier um ein Verfahren zum Messen von Radkräften bei Schienenfahrzeugrädern und eine Vorrichtung zum Eichen von Meßradsätzen. Mit dem Verfahren wird jedoch keine Prüfung unter betriebsähnlichen Belastungsbedingungen durchgeführt. Der Radsatz ist zwar gehaltert, aber so, daß nur statische Messungen daran ausgeführt werden können, d.h. Messungen bei stillstehenden Rädern. Zwar können hier Seitenkräfte und senkrechte Kräfte in den Radsatz eingeleitet werden. Jedoch lassen sich damit nicht die dynamischen Beanspruchungsverhältnisse (Spannungen) simulieren, die sich nur im drehenden Radsatz durch das Abrollen desselben auf Schienen erzielen lassen. Weiter ist zwar vorgesehen, daß der Radsatz durch eine rollfähige Gestaltung der Auflager unter den Betriebsverhältnissen entsprechenden Bedingungen eingespannt wird. Jedoch handelt es sich hierbei um Auflageflächen, an denen die Radialbelastungsmeßeinrichtung auf die Axialbelastungseinrichtung und die Axialbelastungsmeßeinrichtung und über diese erst auf den in letzterer eingespannten Radumfang einwirkt. Durch diese rollfähige Gestaltung des Auflagers der Radialbelastungsmeßeinrichtung auf der Axialbelastungseinrichtung, die mit der Axialbelastungsmeßeinrichtung in Reihe angeordnet ist, soll es dem Rad ermöglicht werden, aufgrund der einwirkenden Radial- und Axialkräfte seitlich nach außen oder innen auszuweichen, also elastische Verformungen auszuführen, die zwar auch im Betrieb auftreten, aber nur eine einzige Art der vielen möglichen Arten von Radsatzverformungen bilden, während dagegen andere, besonders wichtige Arten der Radverformungen nicht mit dem Verfahren nach der DDR-Patentschrift 73 893 erfaßt werden können. Insbesondere ist es nicht möglich, die im Rollbetrieb des Radsatzes auftretenden dynamischen Beanspruchungsverhältnisse mit diesem Verfahren zu erfassen, obwohl es doch gerade wichtig ist, diese Beanspruchungsverhältnisse für die praktische Anwendung und für die Weiterentwicklung der Radsätze der verschiedensten Schienenfahrzeuge erfassen zu können.

Aufgabe der Erfindung ist des demgegenüber insbesondere, ein Verfahren und eine Einrichtung zur Prüfung von Schienenfahrzeugrädern zur Verfügung zu stellen, womit die in der Praxis bei einem Schienenfahrzeugradsatz auftretenden Belastungsverhältnisse simuliert und dabei der Schienenfahrzeugradsatz geprüft werden kann.

Diese Aufgabe wird mit einem Verfahren der eingangs genannten Art erfindungsgemäß dadurch gelöst, daß zur Prüfung unter betriebsähnlichen Belastungsbedingungen der Schienenfahrzeugradsatz rotiert wird, indem die Schienenfahrzeugräder desselben mit rotierenden Schienenringen in Rolleingriff gebracht werden und daß die Axialkräfte wahlweise über den Radachsenbereich des einen der beiden Schienenfahrzeugräder oder beider Schienenfahrzeugräder eingeleitet werden.

Die erfindungsgemäße Einrichtung zur Prüfung von Schienenfahrzeugrädern, die den eingangs genannten Aufbau hat, zeichnet sich erfindungsgemäß dadurch aus, daß

(d) eine derart um jedes Schienenfahrzeugrad herum angeordnete Trommel vorgesehen ist, daß das Schienenfahrzeugrad über seinen Radreifen in Rolleingriff mit einer auf der inneren Umfangsoberfläche der Trommel angebrachten Schiene bringbar ist;

(e) eine Antriebseinrichtung zum Rotieren der Trommel vorge sehen ist; und

(f) die Axialbelastungseinrichtung mit der Achse des Schienenfahrzeugradsatzes entweder direkt oder über eine Belastungshalterung, in welcher der Schienenfahrzeugradsatz gehaltert ist, verbunden ist.

Mit diesem Verfahren nach der Erfindung und mit dieser erfindungsgemäßen Einrichtung ist es möglich, bei Schienenfahrzeugradsätzen betriebsähnliche Belastungsbedingungen in weiterem Umfang zu simulieren, und zwar ist es möglich, nicht nur die am Schienenfahrzeugrad selbst auftretende betriebsähnliche Belastungsbedingungen zu simulieren, sondern es wird damit auch der dem Radsatz im Fahrbetrieb entsprechende Biegemomentenverlauf gewährleistet. Insbesondere können mit diesem Verfahren und dieser Einrichtung diejenigen betriebsähnlichen Belastungsbedingungen simuliert werden, die bei der Geradeausfahrt und beim Bremsen eines Schienenfahrzeugs auftreten, und außerdem kann mit diesem Verfahren und dieser Einrichtung ein Teil der betriebsähnlichen Belastungsbedingungen simuliert werden, die sich bei der Weichenüberfahrt eines Schienenfahrzeugs ergeben.

Eine Weiterbildung des erfindungsgemäßen Verfahrens ermöglicht es außerdem, die übrigen bei der Weichenüberfahrt auftretenden betriebsähnlichen Belastungsbedingungen sowie die sich bei der Bogenfahrt ergebenden betriebsähnlichen Belastungsbedingungen zu simulieren, zeichnet sich dadurch aus, daß zusätzlich zu den über die Schienenfahrzeugradachse eingeleiteten Axialkräften über den Radreifen oder über die Schiene, auf welcher das jeweilige Schienenfahrzeugrad während der Prüfung laufen gelassen wird, Zusatzaxialkräfte in den Radaufstandspunkt des einen Schienenfahrzeugrads oder beider Schienenfahrzeugräder eingeleitet werden.

Eine Weiterbildung der erfindungsgemäßen Einrichtung, welche es ermöglicht, die vorstehende Weiterbildung des Verfahrens nach der Erfindung durchzuführen, zeichnet sich dadurch aus, daß wenigstens eine Zusatzaxialbelastungseinrichtung zum Einleiten einer Zusatzaxialkraft in den Radaufstandspunkt von wenigstens einem der beiden Schienenfahrzeugräder vorgesehen ist, die zum Aufbringen der Zusatzaxialkraft an den Radreifen oder an die Schiene von wenigstens einem der Schienenfahrzeugräder angekoppelt ist.

Vorzugsweise ist bei einer solchen Einrichtung für jedes der beiden Schienenfahrzeugräder je eine gesonderte Zusatzaxialbelastungseinrichtung vorgesehen.

Die obige Weiterbildung des erfindungsgemäßen Verfahrens kann insbesondere so ausgestaltet sein, daß zur Prüfung des Schienenfahrzeugradsatzes unter Bogenfahrtbedingungen über den Radachsenbereich des einen Schienenfahrzeugrads in dessen Radaufstandspunkt eine Axialkraft eingeleitet wird, während gleichzeitig über den Radreifen oder über die Schiene, auf welcher das andere Schienenfahrzeugrad laufen gelassen wird, eine Zusatzaxialkraft in den Radaufstandpunkt des anderen Schienenfahrzeugrads eingeleitet wird.

Außerdem kann die erwähnte Weiterbildung des erfindungsgemäßen Verfahrens so ausgestaltet sein, daß zur Prüfung des Schienenfahrzeugradsatzes unter bestimmten Weichenüberfahrtbedingungen über den Radachsenbereich des einen Schienenfahrzeugrads in dessen Radaufstandspunkt eine Axialkraft eingeleitet wird, während in diesen Radaufstandspunkt keine Zusatzaxialkraft über die Schiene oder den Radreifen eingeleitet wird, und daß abwechselnd damit über den Radachsenbereich dieses Schienenfahrzeugrads in dessen Radaufstandspunkt keine Axialkraft eingeleitet wird, während über die Schiene oder den Radreifen eine Zusatzaxialkraft in diesen Radaufstandspunkt eingeleitet wird. Auf diese Weise können bei der Weichenüberfahrt entstehende Belastungsbedingungen auch in denjenigen Fällen simuliert werden, in denen hohe, nach dem Fahrzeugäußeren zu gerichtete Axialkräfte, die auch als negative Axialkräfte bezeichnet werden, auftreten.

Schließlich kann das Verfahren, wie bereits oben angedeutet, so ausgestaltet sein, daß außerdem die am Schienenfahrzeugradsatz vorgesehene Bremse durch Einleiten von Bremskräften in den Radaufstandspunkt geprüft wird.

Im einzelnen kann die Einrichtung nach der Erfindung so ausgebildet sein, daß für jedes der beiden Schienenfahrzeugräder eine gesonderte Trommel vorgesehen ist.

Ein baulich verhältnismäßig einfacher und kompakter Aufbau der erfindungsgemäßen Einrichtung läßt sich dadurch erreichen, daß die für beide Schienenfahrzeugräder vorgesehene gemeinsame Trommel oder die für jedes der beiden Schienenfahrzeugräder jeweils vorgesehene gesonderte Trommel mittels eines um deren Umfang herum angeordneten Trommellagers, vorzugsweise mittels eines hydrostatischen oder elektromagnetischen Lagers, gelagert und die Trommel axial im wesentlichen offen ist.

Eine andere Ausführungsform der erfindungsgemäßen Einrichtung, die zwar baulich und raummäßig etwas aufwendiger als die eben genannte Ausführungsform ist, jedoch kein hydrostatisches oder elektromagnetisches oder sonstiges Trommelumfangslager erfordert, zeichnet sich dadurch aus, daß die für beide Schienenfahrzeugräder vorgesehene gemeinsame, einseitig axial offene Trommel oder die für jede der beiden Schienenfahrzeugräder jeweils vorgesehene gesonderte Trommel über ihre Drehantriebsachse gelagert ist, wobei die gesonderten, koaxial angeordneten Trommeln auf den einander zugewandten Seiten axial offen sind. Diese Ausführungsform der Einrichtung nach der Erfindung kann zum Einleiten von Zusatzaxialkräften über die Trommeln sowie zum Ein- und Ausbauen des Schienenfahrzeugradsatzes in die bzw. aus der Einrichtung so ausgebildet sein, daß die gemeinsame Trommel oder die gesonderten Trommeln in Axialrichtung verschieb- oder verfahrbar sind.

Im Falle einer Trommellagerung über die Drehantriebsachse kann die Einrichtung zum Zwecke eines günstigen Einleitens der Axial- und Radialkräfte in die Radaufstandspunkte der beiden Schienenfahrzeugräder des Radsatzes so ausgebildet sein, daß bei Verwendung von zwei gesonderten Trommeln jedes Schienenfahrzeugrad über das zugehörige Ende der Schienenfahrzeugachse mittels einer gesonderten Belastungshalterung gehaltert ist, die mit einer senkrecht und parallel zur Schienenfahrzeugachse beweglich geführten Kraftübertragung verbunden ist, welche ihrerseits an die Axial- und Radialbelastungseinrichtung, beispielsweise an servohydraulische Zylinder, angekoppelt ist.

Im Falle der Trommellagerung über Trommelumfangslager kann, da die Schienenfahrzeugräder, welche in die erfindungsgemäße Einrichtung eingebaut sind, leicht zugänglich sind, die Zusatzaxialbelastungseinrichtung direkt, vorzugsweise über eine oder mehrere Rollen, an den Radreifen des jeweiligen Schienenfahrzeugrads angekoppelt sein.

Hingegen empfiehlt es sich im Falle der Lagerung der Trommeln über deren Antriebsachse die erfindungsgemäße Einrichtung so auszubilden, daß die Zusatzaxialbelastungseinrichtung über die Trommel des Schienenfahrzeugrads an die Schiene des letzteren angekoppelt ist, weil die beiden Schienenfahrzeugräder in ihrem in die Einrichtung eingebauten Zustand nur bedingt von außen her zugänglich sind.

Die Ausführungsform der erfindungsgemäßen Einrichtung, bei welcher die Trommeln über Trommelumfangslager gelagert sind, hat außerdem den Vorteil, daß die Axialbelastungseinrichtung direkt, vorzugsweise über ein Zug-Druck-Axiallager, an die Schienenfahrzeugachse angekoppelt sein kann. Außerdem können in dieser Ausführungsform die Radialkräfte über die Originalschienenfahrzeuglager in den Radaufstandspunkt eingeleitet werden, wobei diese Originalschienenfahrzeuglager als Halterung für den Schienenfahrzeugradsatz in der Einrichtung nach der Erfindung verwendet werden können.

Schließlich zeichnet sich eine weitere bevorzugte Ausbildung der erfindungsgemäßen Einrichtung dadurch aus, daß als Schienen zum Einleiten von negativen Axialkräften Rillenschienen vorgesehen sind.

Bevorzugte Ausführungsformen der Erfindung werden nachstehend anhand einiger, in den Figuren 1 bis 9 der Zeichnung dargestellter, besonders bevorzugter Ausführungsformen der erfindungsgemäßen Einrichtung und des Verfahrens nach der Erfindung näher erläutert; es zeigen:

Figur 1 eine Seitenansicht einer ersten Ausführungsform einer Einrichtung nach der Erfindung, wobei Teile dieser Einrichtung, insbesondere die zu prüfenden Schienenfahrzeugräder, die Schienen, auf denen diese Fahrzeugräder abrollen, und die Trommeln, auf deren Innenumfang die Schienen montiert sind, sowie die Trommellager wie auch die Lager, in denen der zu prüfende Schienenfahrzeugradsatz rotiert, im Schnitt dargestellt sind;

Figur 2 eine Seitenansicht einer zweiten Ausführungsform einer Einrichtung nach der Erfindung, wobei einige Teile im Schnitt dargestellt sind, insbesondere die im Zusammenhang mit Figur 1 erwähnten Teile;

Figur 3 einen Schnitt längs der Linie A-A der Figur 2, in Pfeilrichtung gesehen, welcher die in Figur 2 rechte Belastungsübertragungseinrichtung zeigt, mittels derer die Radial- und Axialbelastungen von der Radial- und Axialbelastungseinrichtung auf die Halterungseinrichtung übertragen werden, an der das in Figur 2 rechte Schienenfahrzeugrad drehbar befestigt ist, wobei in Figur 3 die an die Belastungsübertragungseinrichtung angekoppelte Radialbelastungseinrichtung sichtbar ist;

Figur 4 eine Ansicht von oben auf die Belastungsübertragungseinrichtung der Figur 3, wobei hier die an die Belastungsübertragungseinrichtung angekoppelte Axialbelastungseinrichtung sichtbar ist;

Figur 5 eine der Figur 3 entsprechende Seitenansicht einer Belastungsübertragungseinrichtung, mit welcher die Radialkräfte von der in Figur 5 sichtbaren Radialbelastungseinrichtung in horizontaler Richtung auf die Halterungseinrichtung für das Schienenfahrzeugrad übertragen werden anstatt in vertikaler Richtung, wie in Figur 3 dargestellt;

Figur 6 eine schematische Darstellung der Kräfteverhältnisse, die bei der Simulierung einer Bogenfahrt in einer erfindungsgemäßen Einrichtung angewandt werden und auftreten;

Figur 7 eine schematische Darstellung der Kräfteverhältnisse, die bei der Simulierung eines Sinus- bzw. Geradeauslaufs in einer Einrichtung nach der Erfindung angewandt werden und auftreten;

Figur 8 eine schematische Darstellung der Kräfte, die bei der Simulierung einer Weichenüberfahrt in einer erfindungsgemäßen Einrichtung angewandt werden und auftreten; und

Figur 9 eine schematische Darstellung der Kräfte, die beim Bremsen der Rotation des zu prüfenden Schienenfahrzeugradsatzes angewandt werden und auftreten, wobei im linken Teil der Figur 9 die Verhältnisse, ebenso wie in den Figuren 6, 7 und 8, in Vorderansicht des Schienenfahrzeugradsatzes und der Schienen dargestellt sind, während im rechten Teil der Figur 9 die Verhältnisse in Seitenansicht des Schienenfahrzeugradsatzes schematisch veranschaulicht sind.

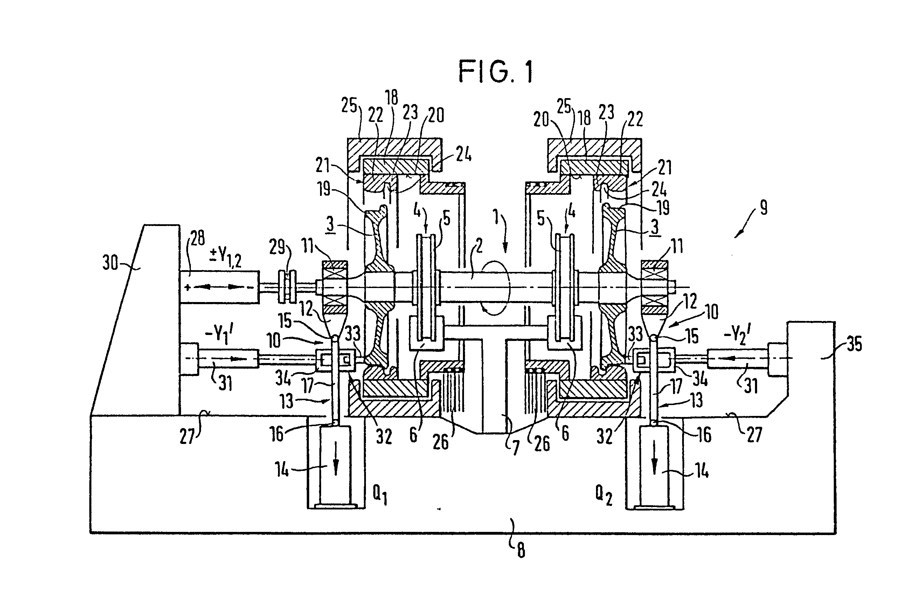

Es sei zunächst eine erste Ausführungsform einer Einrichtung zur Prüfung von Schienenfahrzeugradsätzen unter betriebsähnlichen Belastungsbedingungen erläutert, die in Figur 1 dargestellt ist:

Diese Einrichtung ist zusammen mit einem zu seiner Prüfung gehaltenen Schienenfahrzeugradsatz (1) dargestellt, der eine Schienenfahrzeugachse (2), die auch als Radsatzwelle bezeichnet wird, und wenigstens je ein an deren beiden Enden angebrachtes Schienenfahrzeugrad (3) umfaßt. Der dargestellte Schienenfahrzeugradsatz (1) umfaßt vorliegend außerdem eine Bremseinrichtung (4), welche vorzugsweise die Original-Bremseinrichtung des dargestellten Original-Schienenfahrzeugradsatzes (1) ist und beispielsweise, wie dargestellt, aus zwei Scheibenbremsen besteht, deren Bremsscheiben (5) fest auf der Schienenfahrzeugradachse (2) angebracht und deren Bremsbacken (6) über eine entsprechende Befestigungseinrichtung (7) am Grundkörper (8) der insgesamt mit (9) bezeichneten Einrichtung zur Prüfung des Schienenfahrzeugradsatzes befestigt sind.

Im einzelnen weist die Einrichtung (9) eine Halterungseinrichtung (10) zum drehbaren Befestigen des Schienenfahrzeugradsatzes (1) auf. In der in Figur 1 gezeigten Ausführungsform der Einrichtung (9), in welcher der Schienenfahrzeugradsatz (1) auch in dem Zustand, in welchem er in der Einrichtung (9) gehaltert ist, verhältnismäßig gut von außen zugänglich ist, umfaßt die Halterungseinrichtung (10) vorzugsweise die Original-Radsatzlager (11) und eine Befestigungsvorrichtung (12), die am jeweiligen Radsatzlager (11) befestigt und über eine Verbindungsvorrichtung (13) mit einer Radialbelastungseinrichtung (14) verbunden ist, die ihrerseits am Grundkörper (8) angebracht ist. Die Verbindungsvorrichtung (13) kann beispielsweise aus einem an der Befestigungsvorrichtung (12) vorgesehenen ersten Gelenk (15) und/oder einem an der Radialbelastungseinrichtung (14) vorgesehenen zweiten Gelenk (16) sowie einer Halterungs- und Kraftübertragungsstange (17) bestehen. Diese Halterungs- und Kraftübertragungsstange verbindet die Befestigungsvorrichtung (12) über das erste Gelenk (15) und/oder das zweite Gelenk (16) mit der Radialbelastungseinrichtung (14). Wie aus Figur 1 ersichtlich ist, ist an jedem axialen Ende des Schienenfahrzeugradsatzes (1) eine Halterungseinrichtung (10) vorgesehen.

Weiterhin umfaßt die Einrichtung (9) je eine derart um je eines der beiden Schienenfahrzeugräder (3) herum angeordnete Trommel (18), daß das jeweilige Schienenfahrzeugrad (3) über seinen Radreifen (19) in Rolleingriff mit einer auf der inneren Umfangsoberfläche (20) angebrachten Schiene (21) bringbar ist. Die Trommeln (18) werden auch wegen ihrer Funktion, die sie in der Einrichtung (9) haben, als Belastungstrommeln bezeichnet.

Die Schiene (21) ist, allgemein gesprochen, eine Profillaufbahn für den Radreifen (19) des jeweiligen Schienenfahrzeugrads (3). Sie umfaßt vorliegend außer dem Laufbahnkörper (22), auf dem der Radreifen (19) abrollt, ein Distanzstück (23), damit in beiden Axialrichtungen wirkende Reaktionskräfte im Radaufstandspunkt erzeugt werden können. Das Distanzstück (23), das sich axial radsatzeinwärts vom Laufbahnkörper (22) befindet, kann entweder als gesondertes Teil ausgebildet und in einem vorbestimmten Abstand vom Laufbahnkörper (22) montiert sein, oder es kann, wie in Figur 1 dargestellt, einstückig mit dem Laufbahnkörper (22) ausgebildet und in seinem dem Radreifen (19) zugewandten Teil durch eine Rille (24) vom Laufbahnkörper (22) abgesetzt sein, in welchem Falle also die Schiene (21) eine sogenannte Rillenschiene ist.

Jede der beiden für je eines der beiden Schienenfahrzeugräder (3) vorgesehenen Trommeln (18) ist in der Ausführungsform nach Figur 1 mittels eines um den Umfang der jeweiligen Trommel (18) herum angeordneten Trommellagers (25) gelagert, das daher auch als Trommelumfangslager bezeichnet wird. Vorzugsweise ist als Trommellager (25) ein hydrostatisches oder elektromagnetisches Lager vorgesehen. Eine solche Lagerung der Trommeln (18) hat den Vorteil, daß die Trommeln (18) axial beidseitig offen ausgebildet sein können, wie Figur 1 zeigt, wodurch der zur Prüfung eingebaute Schienenfahrzeugradsatz (1) während der Prüfung von außen leicht zugänglich ist und sich ein konstruktiv einfacher und kompakter Aufbau der Einrichtung (9) ergibt.

Die beiden Trommeln (18), die auch, obwohl das nicht bevorzugt wird, durch eine einzige Trommel ersetzt werden können, werden mittels einer nichtdargestellten Antriebseinrichtung gedreht. Diese Antriebseinrichtung ist beispielsweise ein beiden Trommeln gemeinsamer Elektromotor, der über Antriebsriemen (26) an die Trommeln (18) angekoppelt ist.

Zum Einleiten der für die prüfung des Schienenfahrzeugradsatzes (1) erforderlichen Belastungen in den Radaufstandspunkt von jedem der beiden Schienenfahrzeugräder (3) sind folgende Belastungseinrichtungen vorgesehen:

(1) Die beiden bereits erwähnten Radialbelastungeinrichtungen (14), die je an einem der beiden freien Enden der Schienenfahrzeugachse (2) über je eines der beiden Radsatzlager (11) und die zugehörige Halterungs- und Kraftübertragungseinrichtung (10) angreifen. Diese Radialbelastungseinrichtungen (14) sind vorzugsweise servohydraulische Kolben-Zylinder-Einrichtungen, und sie erzeugen als Aktionskräfte, welche im jeweiligen Radaufstandspunkt des jeweiligen Schienenfahrzeugrads (3) eingeleitet werden, die weiter unten näher erörterten Radialkräfte $Q_1$ und $Q_2$, durch die entsprechende Reaktionskräfte $Q_1{}^*$ und $Q_2{}^*$ hervorgerufen werden. Die Radialbelastungseinrichtungen (14) können vorteilhafterweise im Bodenteil des Grundkörpers (8) der Einrichtung (9) versenkt gegenüber der Montagefläche (27) für die meisten der anderen Bauteile der Einrichtung, für welche die Montagefläche (27) eine Platform bildet, vorgesehen sein.

(2) Eine Axialbelastungseinrichtung (28) zum Einleiten von Axialkräften $\pm Y_1$ (linkes Schienenfahrzeugrad) und $\pm Y_2$ (rechtes Schienenfahrzeugrad) in den jeweiligen Radaufstandspunkt des jeweiligen Schienenfahrzeugrads (3) als Aktionskräfte, durch die Axialkräfte $\pm Y_1{}^*$ und $\pm Y_2{}^*$ als Reaktionskräfte bewirkt werden. Die Axialbelastungseinrichtung (28), die ebenfalls vorzugsweise eine servohydraulische Kolben-Zylinder-Einrichtung ist, ist vorliegend über ein Zug-Druck-Axiallager (29) an das in Figur 1 linke Ende der Schienenfahrzeugachse (2) angekoppelt, so daß die Axialkräfte $\pm Y_{1,2}$ über die Schienenfahrzeugachse in die Radaufstandspunkte eingeleitet werden. Die Axialbelastungseinrichtung (28) ist an einem Standsockel (30) des Grundkörpers (8) befestigt.

(3) Zusatzaxialbelastungseinrichtungen (31) zum Einleiten einer Zusatzaxialkraft $Y_1{}'$ (linkes Schienenfahrzeugrad) und $Y_2{}'$ (rechtes Schienenfahrzeugrad) jeweils in den entsprechenden Radaufstandspunkt des jeweiligen Schienenfahrzeugrads (3) als Aktionskraft. Diese Zusatzaxialkraft $Y_1{}'$ und $Y_2{}'$ wird im Gegensatz zur Axialkraft $Y_1$ und $Y_2$ nicht über die Schienenfahrzeugachse (2), sondern direkt über den Radreifen (19) aufgebracht, indem jede der beiden Zusatzaxialbelastungseinrichtungen (31), die ebenfalls vorzugsweise als servohydraulische Kolben-Zylinder-Einrichtung ausgebildet ist, mit dem zugeordneten Radreifen (19) über ein Gestänge (32) und eine in Rollkontakt mit dem Radreifen (19) befindliche Rolle (33), die mittels der Radialbelastungseinrichtung (31) an den Radreifen (19) andrückbar ist, verbunden ist. Das Gestänge (32) umfaßt eine Umgehungsvorrichtung, zum Beispiel eine Gabel (34) zur mechanischen Umgehung der Halterungs- und Kraftübertragungsstange (17).

Aufgrund dieser Ausbildung der Zusatzaxialbelastungseinrichtung sind nur Druckkräfte und keine Zugkräfte als Zusatzaxialkräfte mittels der Zusatzaxialbelastungseinrichtungen (31) aufbringbar, also nur negative Zusatzaxialkräfte $-Y_1'$ und $-Y_2'$.

Die in Figur 1 linke Zusatzaxialbelastungseinrichtung (31) ist an dem Standsockel (30) angebracht, und die rechte Zusatzaxialbelastungseinrichtung (31) ist an einem auf der entgegengesetzten Seite des Grundkörpers (8) vorgesehenen Standsockel (35) angebracht.

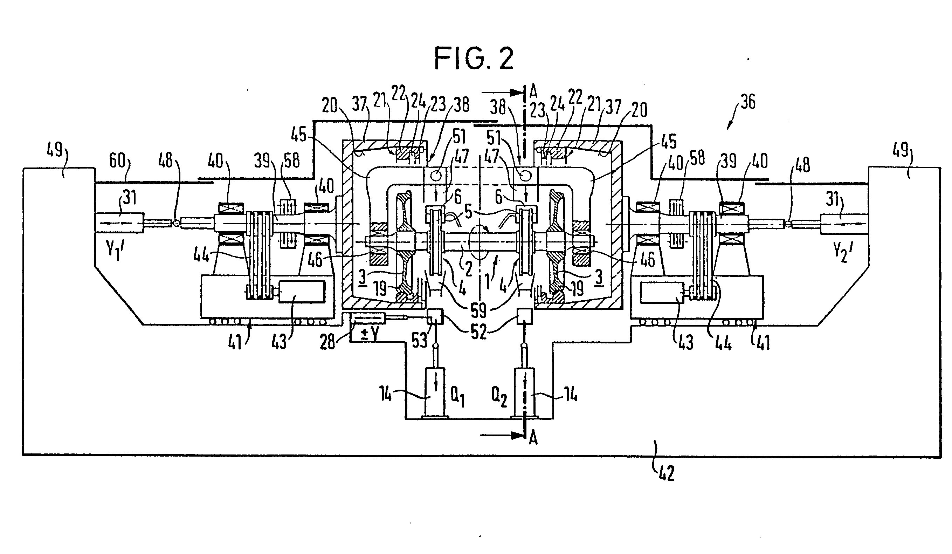

Die vorstehend anhand der Figur 1 beschriebene erste Ausführungsform der Einrichtung zur Prüfung von Schienenfahrzeugradsätzen unter betriebsähnlichen Belastungsbedingungen hat gegenüber der unten in Verbindung mit Figur 2 beschriebenen zweiten Ausführungsform abgesehen von dem baulichen und betriebsmäßigen Aufwand, welchen die um den Umfang der beiden Trommeln (18) jeweils herum vorgesehenen Trommellager (25) beinhalten, insbesondere folgende Vorteile:

(a) Infolge der Lagerung der Trommeln durch Trommelumfangslager und die dadurch bedingte Möglichkeit, die Trommeln an ihren beiden axialen Stirnseiten offen auszuführen, ergibt sich insgesamt ein konstruktiv einfacherer und kompakter Aufbau der gesamten Einrichtung (9), da die Drehlagerung der Trommel in Axialrichtung keinen Raum beansprucht und da es wegen der verhältnismäßig guten Zugänglichkeit des in der Einrichtung (9) gehalterten Schienenfahrzeugradsatzes (1) von außen her nicht erforderlich ist, innerhalb der Trommeln je eine Halterungseinrichtung, beispielsweise je einen Haltebügel, zum drehbaren Befestigen des Schienenfahrzeugradsatzes mit unterzubringen, wie das bei der Ausführungsform nach Figur 2 erforderlich ist. Aufgrund dieser baulichen Vorteile ergeben sich wesentliche funktionelle Vorteile, die nachstehend angegeben sind:

(b) Einer der funktionellen Vorteile der Ausführungsform nach Figur 1 besteht darin, daß die Radialkräfte direkt über die Radsatzlager (11), die vorzugsweise die Originalradsatzlager sein können, anstelle deren aber auch verstärkte Versuchsradsatzlager verwendbar sind, eingeleitet werden können.

(c) Ein weiterer wichtiger funktioneller Vorteil besteht darin, daß die in vertikaler Richtung zu beschleunigenden Zusatzmassen klein sind, da diese Zusatzmassen vorliegend im wesentlichen lediglich aus der eine verhältnismäßig geringe Masse besitzenden Befestigungsvorrichtung (12), wenigstens einem Gelenk (15) und/oder (16) und der Halterungs- und Kraftübertragungsstange (17) an jedem axialen Ende des Schienenfahrzeugradsatzes (1) bestehen. Diese geringen Zusatzmassen ergeben eine den Praxisbedingungen der zu prüfenden Schienenfahrzeugradsätze angepaßtere Prüfung als in der Ausführungsform nach Figur 2, weil die geringen Zusatzmassen eine bessere Simulation im höheren Frequenzbereich bis 100 Hz ermöglichen, da sich ein besseres Übertragungsverhältnis der Radialkräfte ergibt. Dieser Frequenzbereich ergibt sich insbesondere aus der Raddrehfrequenz, der Schwellenfrequenz, der Schienenstoßfrequenz, der Weichenüberfahrung, der Brückenüberfahrung, der Schienenriffelung u.dgl.

(d) Auch die Axial- und Zusatzaxialkräfte können in vorteilhafter Weise direkt in den Schienenfahrzeugradsatz (1) eingeleitet werden, wie oben bei der Erläuterung der Einrichtung nach Figur 1 im einzelnen beschrieben. In entsprechender Weise wie bei den Radialkräften ergibt sich auch bezüglich der Axial- und Zusatzaxialkräfte durch die geringen Zusatzmassen ein gutes Übertragungsverhältnis.

Eine Schwierigkeit der Einrichtung nach Figur 1 besteht darin, daß zumindest in der dargestellten Ausführungsform keine positiven Zusatzaxialkräfte, d.h. keine Zugkräfte, auf den Radreifen (19) angewandt werden können. Es ist jedoch möglich, je eine weitere Zusatzaxialbelastungseinrichtung (nicht dargestellt) zwischen den beiden Trommeln (18), beispielsweise an der Befestigungseinrichtung (7) vorzusehen, über die auf die Innenseite des Radreifens (19) der beiden Schienenfahrzeugräder (3) eine einer Zugkraft von außen entsprechende Druckkraft ausgeübt wird, was beispielsweise über je ein Gestänge und je eine an der Innenseite jedes der beiden Radreifen (19) ablaufenden Rolle erfolgen kann, wie das mittels des Gestänges (32) und der Rolle (33) von außen her geschieht.

Es sei nun unter Bezugnahme auf Figur 2 die zweite Ausführungsform der Einrichtung zur Prüfung von Schienenfahrzeugradsätzen unter betriebsähnlichen Belastungsbedingungen beschrieben:

Diese Einrichtung, die insgesamt mit (36) bezeichnet ist, und in der ein Schienenfahrzeugradsatz (1) geprüft werden kann, wie er weiter oben in Verbindung mit Figur 1 näher erläutert worden ist, unterscheidet sich von der Einrichtung (9) im wesentlichen durch die andersartige Lagerung ihrer Trommeln (37) und die dadurch bedingte andere Ausbildung dieser Trommeln und die durch diese Ausbildung der Trommeln bedingte andere Ausbildung und Anordnung der Halterungseinrichtung (38) für den Schienenfahrzeugradsatz (1) sowie die Art der Einleitung der Radial- und Axialkräfte und der Zusatzaxialkräfte in die Radaufstandspunkte der beiden Schienenfahrzeugräder (3).

In der Einrichtung (36) sind die beiden Trommeln (37) über ihre Drehantriebsachsen (39) gelagert, wobei die Drehantriebsachsen (39) notwendigerweise auf den einander abgewandten axialen Stirnseiten der beiden Trommeln (37) vorgesehen sind, so daß infolgedessen das Innere der Trommeln (37) nur von den einander zugewandten axialen Stirnseiten dieser Trommeln her zugänglich ist.

Im einzelnen sind die Drehantriebsachsen (39) mittels Lagern auf Lagerböcken (41) gelagert, die in Axialrichtung der Trommeln (37) auf dem Grundkörper (42) der Einrichtung (36) verschieb- oder verfahrbar sind, so daß die Trommeln (37) zum Einbau des Schienenfahrzeugradsatzes (1) in die Einrichtung (36) und zum Ausbau aus dieser Einrichtung in axialer Richtung und zur Einleitung von Zusatzaxialkräften bewegbar sind.

Auf jedem der beiden Lagerböcke (41) befindet sich vorliegend ein Elektromotor (43), der die zugeordnete Trommel (37) über Antriebsriemen (44) rotiert.

Jedes der beiden Schienenfahrzeugräder (3) des Schienenfahrzeugradsatzes (1) ist über das jeweilige Ende der Schienenfahrzeugachse mittels einer gesonderten Belastungshalterung (45) gehaltert. Es sei hier darauf hingewiesen, daß es auch möglich ist, die beiden Belastungshalterungen (45) starr oder elastisch miteinander zu verbinden. In der vorliegenden Ausführungsform besteht jede der beiden Belastungshalterungen (45) im wesentlichen aus einem, beispielsweise L-förmigen, Belastungsbügel (45), wie in Figur 2 dargestellt, in dem je ein Radsatzlager (46) zum drehbaren Lagern des jeweiligen Endes der Schienenfahrzeugachse (2) vorgesehen ist.

Die Einrichtung (36) nach Figur 2 umfaßt zur Simulierung der verschiedenen Belastungsbedingungen, auf die weiter unten noch näher eingegangen wird, im wesentlichen die gleichen Belastungseinrichtungen wie die Einrichtung (9) nach Figur 1, wobei jedoch diese Belastungseinrichtungen anders als in Figur 1 angeordnet und an den Schienenfahrzeugradsatz (1) angekoppelt sind, nämlich in folgender Weise:

(1) Die beiden Radialbelastungseinrichtungen (14) sind über je eine Halterungs- und Kraftübertragungsvorrichtung (47) mit der jeweiligen Belastungshalterung (45) verbunden, über welche nicht nur die einzuleitenden Radialkräfte übertragen werden, sondern mittels deren gleichzeitig die jeweilige Belastungshalterung (45) in Axial- und Radialrichtung bewegbar gehalten ist.

(2) Die Axialbelastungseinrichtung (28) ist an eine der beiden Halterungs- und Kraftübertragungsvorrichtungen (47) angekoppelt, und zwar vorliegend an die in Figur 2 linke Halterungs- und Kraftübertragungsvorrichtung.

(3) die Zusatzaxialbelastungseinrichtungen (31) sind je über ein Zug-Druck-Axiallager (48) mit dem freien Ende einer der beiden Drehantriebsachsen (39) verbunden, so daß die Zusatzaxialkräfte ±Y1′ und ±Y2′ über die jeweilige Trommel (37) und die darin befindliche Schiene (21) in den Radaufstandspunkt des jeweiligen Schienenfahrzeugrads (3) eingeleitet werden. Diese beiden Zusatzaxialbelastungseinrichtungen (31) sind an Standsockeln (49) angebracht, die sich auf dem Grundkörper (42) befinden oder mit diesem einstückig sind.

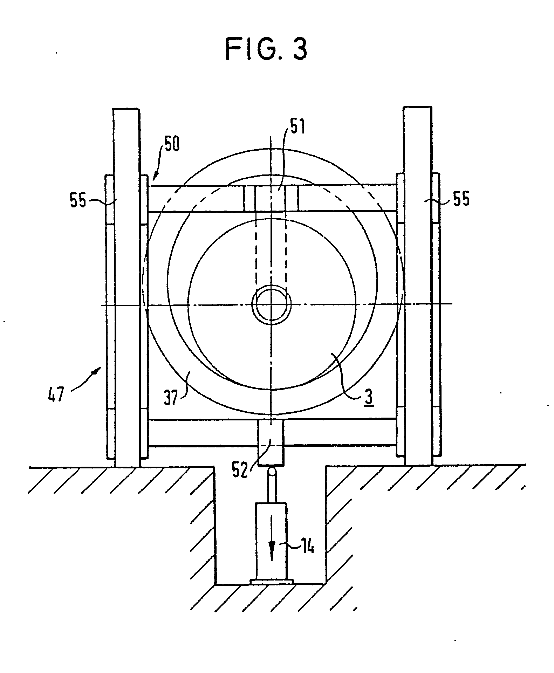

Es seien nun zwei Ausführungsformen der im wesentlichen rahmenartig ausgebildeten Halterungs- und Kraftübertragungsvorrichtung (47) anhand der Figuren 3, 4 und 5 näher erläutert:

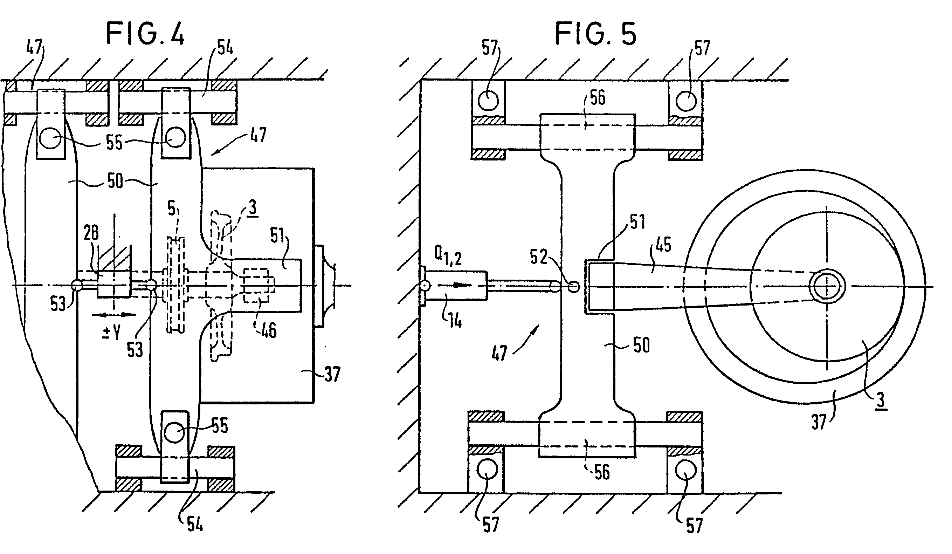

Zunächst sei die Ausführungsform nach den Figuren 3 und 4 erläutert, die im wesentlichen der in Figur 2 mehr schematisch dargestellten Ausführungsform entspricht, wobei jedoch abweichend hiervon die Axialbelastungseinrichtung (28) doppeltwirkend zwischen den beiden Halterungs- und Kraftübertragungsvorrichtungen (47) angeordnet ist. Jede der beiden Halterungs- und Kraftübertragungsvorrichtungen (47) umfaßt einen Rahmen (50), der bei (51) an die zugeordnete Belastungshalterung (45), bei (52) an die zugeordnete Radialbelastungseinrichtung (14) und bei (53) an die Axialbelastungseinrichtung (28) angekoppelt ist. Dieser Rahmen ist in der Ausführungsform nach den Figuren 3 und 4 über Horizontalführungen (54) parallel und über Vertikalführungen (55) senkrecht zur Schienenfahrzeugachse (2) bzw. zur Drehantriebsachse (39) verschiebbar gelagert.

Die Halterungs- und Kraftübertragungsvorrichtung (47) gemäß Figur 5 unterscheidet sich von derjenigen nach den Figuren 3 und 4 im wesentlichen dadurch, daß die Wirkungsrichtung der Radialbelastungseinrichtung (14) anstatt vertikal horizontal ist, und daß dem entsprechend der Rahmen (50) über zwei gekreuzte Horizontalführungen (56) und (57) parallel und senkrecht zur Schienenfahrzeugachse (2) bzw. zur Drehantriebsachse (39) verschiebbar ist. Diese besondere Anordnung der Radialbelastungseinrichtung (14) ermöglicht es, den Rahmen (50) einfacher auszuführen, nämlich im wesentlichen L-förmig anstatt U-förmig bzw. doppelt U-förmig, da mit diesem Rahmen bei der Ausführungsform nach Figur 5 nicht der gesamte Schienenfahrzeugradsatz (1) seitlich umgangen werden muß.

Im übrigen sind die Radialbelastungseinrichtungen (14) und die Axialbelastungseinrichtung (28) am Grundkörper (42) und/oder an einem oder mehreren mit dem Grundkörper (42) verbundenen Standsockel gehalten.

Mit (58) ist je eine auf je einer der beiden Drehantriebsachsen (39) vorgesehene Notbremseinrichtung bezeichnet. Außerdem sind Absaugvorrichtungen (59) unter den beiden Bremsscheiben (5) angeordnet, mit denen der Abrieb, der beim Bremsen entsteht, abgesaugt wird.

Schließlich ist mit (60) eine Abdeckung für den gesamten Aufbau, der sich auf dem Grundkörper (42) befindet, bezeichnet, und diese Abdeckung umfaßt, wie aus Figur 2 ersichtlich ist, mehrere teleskopisch in bezug aufeinander verschiebbare Abdeckungsabschnitte.

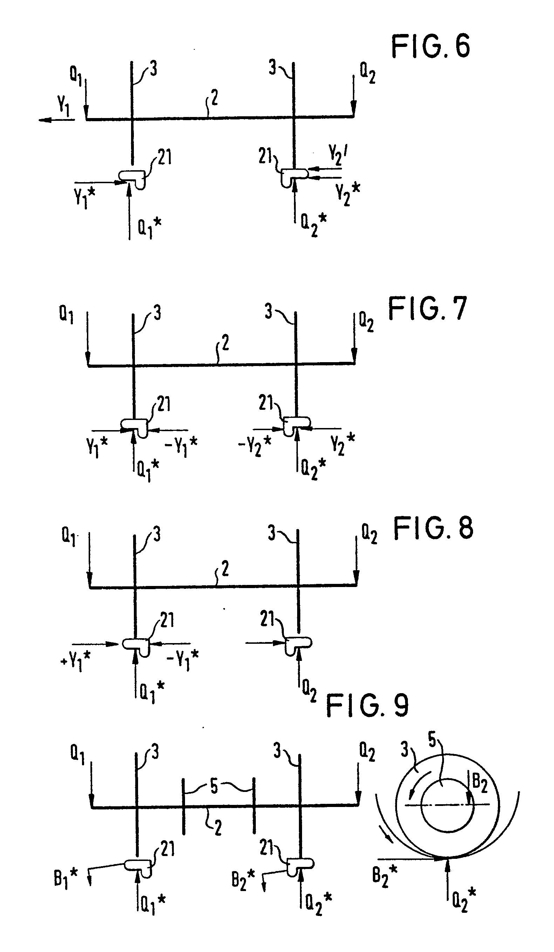

Es seien nun anhand der Figuren 6 bis 9, welche schematische Darstellungen wichtiger Lastfälle am Radsatz eines Schienenfahrzeugs sind, die Simulierungen dieser Lastfälle mittels der vorstehend beschriebenen Einrichtungen erläutert, wobei die oben angegebenen Vorzeichenregeln gelten, wonach die mit einem Stern versehenen Reaktionskräfte positiv sind, wenn sie zur Fahrzeugmitte gerichtet sind, und negativ, wenn sie nach dem Fahrzeugäußeren zu gerichtet sind, und wonach die ohne einen Stern versehenen Aktionskräfte positiv sind, wenn sie als Zugkräfte am Angriffspunkt der Belastungseinrichtung ausgeübt werden, dagegen negativ, wenn sie als Druckkräfte am Angriffspunkt der Belastungseinrichtung wirken.

Es sei weiterhin darauf hingewiesen, daß die Prüfung von Schienenfahrzeugradsätzen mit den oben beschriebenen Einrichtungen insbesondere die Prüfung der Schienenfahrzeugräder selbst, der Schienenfahrzeugachse bzw. Radsatzwelle, der Verbindung zwischen dem Schienenfahrzeugrad und der Schienenfahrzeugachse bzw. Radsatzwelle, die zum Beispiel eine Schrumpfverbindung, eine Klebe-Schrumpfverbindung, eine Schraubverbindung o.dgl. sein kann, sowie der Radsatzlager, der Bremsvorrichtungen, zum Beispiel der Bremsscheiben, und sonstiger Aufbauteile an den Schienenfahrzeugradsätzen, wie beispielsweise Schlupfkupplungen umfassen kann.

Es seien nun die Simulationen einzelner Belastungsfälle erläutert:

I. Zunächst sei die Simulierung des Lastfalls der Bogenfahrt erläutert. Die reale Bogenfahrt ist im wesentlichen dadurch charakterisiert, daß durch die auftretenden Fliehkräfte eine quasistatische Gewichtsverlagerung auf das bogenäußere Schienenfahrzeugrad bewirkt wird. Damit ergibt sich am bogenäußeren Schienenfahrzeugrad die höchste Radialkraft $Q_1^*$ und die höchste zur Fahrzeugmitte gerichtete Axialkraft $Y_1^*$, während dagegen am bogeninneren Schienenfahrzeugrad, bedingt durch die Entlastung, eine niedrigere Radialkraft $Q_2^*$ und eine niedrigere Axialkraft $Y_2^*$ wirkt, wobei diese Axialkraft $Y_2^*$ ebenfalls zur Fahrzeugmitte hin gerichtet ist, weil sich bei der Bogenfahrt infolge der starren Schienenfahrzeugachse eine Schrägstellung der Schienenfahrzeugräder zur Schiene ergibt. Der Lastfall der Bogenfahrt ist also charakterisiert durch $Y_1^* > Y_2^*$ und $Q_1^* > Q_2^*$ wie in Figur 6 dargestellt.

Die Simulierung der Bogenfahrtlastbedingungen, die mit den Einrichtungen nach Figur 1 und 2 in gleicher Weise geschieht, wird folgendermaßen durchgeführt:

(1) Die Reaktionskräfte $Q_1^*$ und $Q_2^*$ werden durch Aktionskräfte $Q_1$ und $Q_2$ bewirkt.

(2) Die Reaktionskraft $Y_1^*$ wird durch Zugbelastung mittels der Axialbelastungseinrichtung (28) simuliert, indem eine Aktionskraft $-Y_1$ ausgeübt wird.

(3) Die Reaktionskraft $Y_2^*$ wird durch eine Druckkraft mittels der in den Figuren 1 und 2 rechts dargestellten Zusatzaxialbelastungseinrichtung (31), also durch Ausüben einer positiven Zusatzaxialkraft $Y_2'$ simuliert.

II. Der Lastfall des Sinuslaufs, wie die Geradeausfahrt auch bezeichnet wird, ist dadurch charakterisiert, daß wechselnde dynamische Radialkräfte $Q_1^*$ und $Q_2^*$ wirken, die der statischen Radialkraft überlagert sind und sich durch Stöße ergeben, wie sie weiter oben im Zusammenhang mit dem Übertragungsfrequenzbereich anhand der Einrichtung nach Figur 1 erläutert worden sind. Außerdem ergeben sich bei der Geradeausfahrt an beiden Schienenfahrzeugrädern wechselnde Axialkräfte aufgrund des "Hin- und Herschwankens" des Schienenfahrzeugs, und zwar ergeben sich am bogenäußeren Schienenfahrzeugrad wechselnde Reaktionskräfte $\pm Y_1^*$ und am bogeninneren Schienenfahrzeugrad wechselnde Reaktionskräfte $\pm Y_2^*$.

Die Simulierung dieser Geradeausfahrtbelastungen geschieht in den beiden Einrichtungen nach den Figuren 1 und 2 in gleicher Weise, nämlich dadurch, daß als Aktionskräfte wechselnde Axialkräfte $\pm Y_1$ und $\pm Y_2$ und wechselnde Radialkräfte $Q_1$ und $Q_2$ erzeugt werden, und daß weder Zusatzaxialkräfte $\pm Y_1'$ noch Zusatzaxialkräfte $\pm Y_2'$ angewandt werden.

III. Die Belastung bei Weichenüberfahrt ist dadurch charakterisiert, daß einseitig, d.h. an dem einen der beiden auf der gleichen Achse befindlichen Schienenfahrzeugräder als Reaktionskräfte hohe Radialkräfte $Q_1^*$ bzw. $Q_2^*$ und einseitig in beide Richtungen wirkende hohe Axialkräfte $\pm Y_1^*$ bzw. $\pm Y_2^*$ wirken, wie in Figur 8 für das linke Schienenfahrzeugrad angedeutet ist.

(A) Die Simulierung der Weichenüberfahrtbelastungen durch die in Figur 1 dargestellte Einrichtung geschieht folgendermaßen:

(1) Die hohen positiven Reaktionskräfte $Y_1^*$ und $Y_2^*$ werden durch hohe positive Aktionskräfte $Y_1$ und $Y_2$ simuliert, wobei keine Zusatzaxialkräfte $Y_1'$ und $Y_2'$ ausgeübt werden.

In der in Figur 1 dargestellten Einrichtung ist eine Simulierung von hohen negativen Reaktionskräften $-Y_1^*$ und $-Y_2^*$ nicht möglich.

(2) Die Reaktionskräfte $Q_1^*$ und $Q_2^*$ werden dadurch simuliert, daß wechselnd einseitig hohe Aktionskräfte $Q_1$ und $Q_2$ angewandt werden.

(B) Die Simulierung der Weichenüberfahrtbelastungen durch die Einrichtung nach Figur 2 geschieht folgendermaßen:

(1) Es werden als Aktionskräfte hohe wechselnde Axialkräfte $\pm Y_1$ und $\pm Y_2$ in Verbindung mit wechselnden Zusatzaxialkräften $\pm Y_1'$ und $-Y_2'$ angewandt, wobei immer nur entweder hohe negative Axialkräfte $-Y_1$ mit $Y_1'$ gleich Null oder hohe positive Zusatzaxialkräfte $\pm Y_1'$ mit $Y_1$ gleich Null angewandt werden, wobei dasselbe für die Aktionskräfte $Y_2$ und $Y_2'$ gilt.

(2) Außerdem werden wechselnd einseitig hohe Aktionskräfte $Q_1$ und $Q_2$ erzeugt.

In Figur 8 ist der charakteristische Fall einer Weichenüberfahrt dargestellt, der sich dadurch auszeichnet, daß an dem einen der beiden Schienenfahrzeugräder eine hohe Radialkraft $Q_1^*$ in Verbindung mit einer negativen Axialkraft $-Y_1^*$ auftritt.

IV. Die Belastungen, die beim Bremsen auftreten, sind dadurch charakterisiert, daß als Reaktionskräfte hohe Radialkräfte $Q_1^*$ und $Q_2^*$ sowie in Fahrzeuglängsrichtung die Bremskräfte $B_1^*$ und $B_2^*$ auftreten.

Zur Simulierung der durch das Bremsen verursachten Belastungen, die in den beiden Einrichtungen nach den Figuren 1 und 2 in gleicher Weise erfolgt, wird die Bremseinrichtung (4) verwendet, welche die Originalbremseinrichtung des Schienenfahrzeugs sein kann, und durch Betätigen dieser Bremseinrichtung werden als Aktionskräfte die in den beiden Radaufstandspunkten in Fahrzeuglängsrichtung wirkenden Bremskräfte $B_1$

und $B_2$ erzeugt. Außerdem werden mittels der Radialbelastungseinrichtungen (14) als weitere Aktionskräfte Radialkräfte $Q_1$ und $Q_2$ erzeugt.

Es sei abschließend darauf hingewiesen, daß zur Einleitung von Axialkräften, die zur Fahrzeugmitte hin gerichtet sind, die erwähnten Rillenschienen zu verwenden sind, die, wie in Figur 1 und 2 dargestellt, einteilig oder auch zweiteilig sein können.

Die Einrichtungen nach den Figuren 1 und 2 können bevorzugt als Hochgeschwindigkeitsversuchsstände ausgeführt sein, indem in der Einrichtung nach Figur 1 entsprechende Trommelumfangslager (25) und in der Einrichtung nach Figur 2 verhältnismäßig kleine, nämlich auf der Drehantriebsachse (39) vorgesehene Kugellager (40) verwendet werden, so daß auf diese Weise Geschwindigkeiten von 350 bis 400 km/h simuliert werden können, wohingegen sich mit der Einrichtung, die in der deutschen Patentschrift 26 01 259 dargestellt ist, nur Geschwindigkeiten von 50 bis 80 km/h simulieren lassen, weil diese Einrichtung relativ große Kugellager am Trommelumfang hat.

Durch die erfindungsgemäße Einrichtung, insbesondere durch die dargestellten und beschriebenen Ausführungsformen, wird im Unterschied zu der Einrichtung nach der deutschen Patentschrift 26 01 259 einerseits eine wirklichkeitsgetreue Prüfung einzelner Komponenten eines gesamten Schienenfahrzeugradsatzes, wie Schienenfahrzeugrad, Schienenfahrzeugachse, Bremsbefestigung usw., und andererseits ein relativ einfacher Ein- und Ausbau der zu prüfenden Schienenfahrzeugradsätze gewährleistet.

Die Steuerung der erfindungsgemäßen Einrichtung kann mit Hilfe eines Rechners, insbesondere eines Mikro-Rechners, erfolgen, mit dem nach einem programm die Einzelbelastungen, ihre Kombinationen sowie die zugehörigen Geschwindigkeiten vorgegeben werden. Das für jeweilige Einsatzbedingungen des Schienenfahrzeugradsatzes gültige Programm, durch welches die Einrichtung gesteuert wird, ermöglicht es, durch sich häufig wiederholende Simulationen der extremen Belastungsfälle in einer stark reduzierten Versuchszeit, die den in der Fahrzeugindustrie üblichen Versuchen auf einer Versuchsstrecke entspricht, einen zutreffenden Betriebsfestigkeitsnachweis zu erbringen.

## Patentansprüche

1. Verfahren zur Prüfung von Schienenfahrzeugrädern (3), bei dem ein gesamter Schienenfahrzeugradsatz (1), der mindestens eine Schienenfahrzeugachse (2) und wenigstens an deren Enden angebrachte Schienenfahrzeugräder (3) umfaßt, durch Einleiten von Radial- und/oder Axialkräften in den Radaufstandspunkt geprüft wird, wobei die Radialkräfte wahlweise über den Radachsenbereich des einen der beiden Schienenfahrzeugräder (3) oder beider Schienenfahrzeugräder (3) eingeleitet werden, dadurch gekennzeichnet, daß zur Prüfung unter betriebsähnlichen Belastungsbedingungen der Schienenfahrzeugradsatz rotiert wird, indem die Schienenfahrzeugräder (3) desselben mit rotierenden Schienenringen (21) in Rolleingriff gebracht werden und daß die Axialkräfte wahlweise über den Radachsenbereich des einen der beiden Schienenfahrzeugräder (3) oder beider Schienenfahrzeugräder (3) eingeleitet werden.

2. Verfahren nach Anspruch 1, dadurch gekennzeichnet, daß zusätzlich zu den über die Schienenfahrzeugachse (2) eingeleiteten Axialkräften über den Radreifen (19) oder über die Schiene (21), auf welcher das jeweilige Schienenfahrzeugrad (3) während der Prüfung laufen gelassen wird, Zusatzaxialkräfte in den Radaufstandspunkt des einen Schienenfahrzeugrads (3) oder beider Schienenfahrzeugräder (3) eingeleitet werden.

3. Verfahren nach Anspruch 2, dadurch gekennzeichnet, daß zur Prüfung des Schienenfahrzeugradsatzes (1) unter Bogenfahrtbedingungen über den Radachsenbereich des einen Schienenfahrzeugrads (3) in dessen Radaufstandspunkt eine Axialkraft eingeleitet wird, während gleichzeitig über den Radreifen (19) oder über die Schiene (21), auf welcher das andere Schienenfahrzeugrad (3) laufen gelassen wird, eine Zusatzaxialkraft in den Radaufstandspunkt des anderen Schienenfahrzeugrads (3) eingeleitet wird.

4. Verfahren nach Anspruch 2, dadurch gekennzeichnet, daß zur prüfung des Schienenfahrzeugradsatzes (1) unter Weichenüberfahrtbedingungen über den Radachsenbereich des einen Schienenfahrzeugrads (3) in dessen Radaufstandspunkt eine Axialkraft eingeleitet wird, während in diesen Radaufstandspunkt keine Zusatzaxialkraft über den Radreifen (19) oder die Schiene (21) eingeleitet wird, und daß abwechselnd damit über den Radachsenbereich dieses Schienenfahrzeugrads (3) in dessen Radaufstandspunkt keine Axialkraft eingeleitet wird, während über die Schiene (21) oder den Radreifen (19) eine Zusatzaxialkraft in diesen Radaufstandspunkt eingeleitet wird.

5. Verfahren nach einem der Ansprüche 1 bis 4, dadurch gekennzeichnet, daß außerdem die am Schienenfahrzeugradsatz (1) vorgesehene Bremse (4) durch Einleiten von Bremskräften in den Radaufstandspunkt geprüft wird.

6. Einrichtung zur Prüfung von Schienenfahrzeugrädern, bei der ein gesamter Schienenfahrzeugradsatz (1), der mindestens eine Schienenfahrzeugachse (2) und wenigstens an deren Enden angebrachte Schienenfahrzeugräder (3) umfaßt, durch Einleiten von Radial- und/oder Axialkräften in den Radaufstandspunkt geprüft wird, wobei die Radialkräfte wahlweise über den Radachsenbereich des einen der beiden Schienenfahrzeugräder (3) oder beider Schienenfahrzeugräder (3) eingeleitet werden, umfassend:

(a) eine Halterungseinrichtung (10; 45) zum drehbaren Befestigen des Schienenfahrzeugradsatzes;

(b) eine mit dem Radachsenbereich des einen Schienenfahrzeugrads (3) verbundene erste Radialbelastungseinrichtung (14) und eine mit dem Radachsenbereich des anderen Schienenfahrzeugrads (3) verbundene zweite Radialbelastungseinrichtung (14); und

(c) eine Axialbelastungseinrichtung (28) zum Aufbringen einer Axialkraft;

dadurch gekennzeichnet, daß

(d) eine derart um jedes Schienenfahrzeugrad (3) herum angeordnete Trommel (18; 37) vorgesehen ist, daß das Schienenfahrzeugrad (3) über seinen Radreifen (19) in Rolleingriff mit einer auf der inneren Umfangsoberfläche (20) der Trommel (18; 37) angebrachten Schiene (21) bringbar ist;

(e) eine Antriebseinrichtung (43) zum Rotieren der Trommel (18; 37) vorgesehen ist; und

(f) die Axialbelastungseinrichtung (28) mit der Achse (2) des Schienenfahrzeugradsatzes (1) entweder direkt oder über eine Belastungshalterung (45), in welcher der Schienenfahrzeugradsatz (1) gehalten ist, verbunden ist.

7. Einrichtung nach Anspruch 6, dadurch gekennzeichnet, daß wenigstens eine Zusatzaxialbelastungseinrichtung (31) zum Einleiten einer Zusatzaxialkraft in den Radaufstandspunkt von wenigstens einem der beiden Schienenfahrzeuggräder (3) vorgesehen ist, die zum Aufbringen der Zusatzaxialkraft an den Radreifen (19) oder an die Schiene (21) von wenigstens einem der Schienenfahrzeuggräder (3) angekoppelt ist.

8. Einrichtung nach Anspruch 7, dadurch gekennzeichnet, daß für jedes der beiden Schienenfahrzeuggräder (3) je eine gesonderte Zusatzaxialbelastungseinrichtung (31) vorgesehen ist.

9. Einrichtung nach Anspruch 6, 7 oder 8, dadurch gekennzeichnet, daß für jedes der beiden Schienenfahrzeuggräder (3) eine gesonderte Trommel (18; 37) vorgesehen ist.

10. Einrichtung nach einem der Ansprüche 6 bis 9, dadurch gekennzeichnet, daß die für beide Schienenfahrzeuggräder (3) vorgesehene gemeinsame Trommel oder die für jedes der beiden Schienenfahrzeuggräder (3) jeweils vorgesehene gesonderte Trommel (18) mittels eines um deren Umfang herum angeordneten Trommellagers (25), vorzugsweise mittels eines hydrostatischen oder elektromagnetischen Lagers, gelagert und die Trommel axial im wesentlichen offen ist (Figur 1).

11. Einrichtung nach einem der Ansprüche 6 bis 9, dadurch gekennzeichnet, daß die für beide Schienenfahrzeuggräder (3) vorgesehene gemeinsame, einseitig axial offene Trommel oder die für jedes der beiden Schienenfahrzeuggräder (3) jeweils vorgesehene gesonderte Trommel (37) über ihre Drehantriebsachse (39) gelagert ist, wobei die gesonderten, koaxial angeordneten Trommeln (37) auf den einander zugewandten Seiten axial offen sind (Figur 2).

12. Einrichtung nach Anspruch 11, dadurch gekennzeichnet, daß die gemeinsame Trommel oder die gesonderten Trommeln (37) in Axialrichtung verschieboder verfahrbar sind (Figur 2).

13. Einrichtung nach Anspruch 11 oder 12, dadurch gekennzeichnet, daß bei Verwendung von zwei gesonderten Trommeln (37), jedes Schienenfahrzeugrad (2) über das zugehörige Ende der Schienenfahrzeugachse (2) mittels einer gesonderten Belastungshalterung (45) gehaltert ist, die mit einer senkrecht und parallel zur Schienenfahrzeugachse (2) beweglich geführten Halterungs- und Kraftübertragungsvorrichtung (47) verbunden ist, welche ihrerseits an die Axial- und Radialbelastungseinrichtung (14,28) angekoppelt ist (Figur 2 bis 5).

14. Einrichtung nach einem der Ansprüche 6 bis 13, insbesondere nach Anspruch 10, dadurch gekennzeichnet, daß die Zusatzaxialbelastungseinrichtung (31) direkt, vorzugsweise über eine oder mehrere Rollen (33), an den Radreifen (19) des Schienenfahrzeugrads (3) angekoppelt ist (Figur 1).

15. Einrichtung nach einem der Ansprüche 6 bis 13, insbesondere nach Anspruch 11, 12 oder 13, dadurch gekennzeichnet, daß die Zusatzaxialbelastungseinrichtung (31), vorzugsweise über ein Zug-Druck-Axiallager (48), an die Trommel (37) angekoppelt ist (Figur 2).

16. Einrichtung nach einem der Ansprüche 6 bis 15, insbesondere nach Anspruch 10, dadurch gekennzeichnet, daß die Axialbelastungseinrichtung (28) direkt, vorzugsweise über ein Zug-Druck-Axiallager (29), an die Schienenfahrzeugachse (2) angekoppelt ist (Figur 1).

17. Einrichtung nach einem der Ansprüche 6 bis 16, dadurch gekennzeichnet, daß als Schienen (21) zum Einleiten von negativen Axialkräften Rillenschienen oder Laufbahnkörper (22) mit gesonderten Distanzstücken (23) vorgesehen sind.

## Revendications

1. Méthode pour tester des roues de véhicule sur rails (3), avec laquelle on teste l'ensemble d'un essieu monté (1) de véhicule sur rails qui comprend au moins un axe (2) de véhicule sur rails et au moins des roues (3) de véhicule sur rails montées à ses extrémités, par induction de forces radiales et/ou axiales au point de contact au sol des roues, les forces radiales étant induites au choix soit par la zone d'essieu d'une des deux roues (3) du véhicule sur rails soit par les deux roues (3) du véhicule sur rails, caractérisée en ce qu'on fait tourner l'essieu monté de véhicule sur rails, pour réaliser un contrôle dans des conditions de chargement analogues à celles du fonctionnement, en amenant les roues (3) du véhicule sur rails en contact de roulement avec des anneaux de rails (21) et que les forces axiales sont induites au choix soit par la zone d'essieu d'une des deux roues (3) du véhicule sur rails soit par les deux roues (3) du véhicule sur rails.

2. Méthode selon la revendication 1, caractérisée en ce qu'on applique, outre les forces axiales induites par l'axe (2) de véhicule sur rails, des forces axiales supplémentaires au point de contact au sol d'une des roues (3) du véhicule sur rails ou des deux roues (3) du véhicule sur rails au moyen du bandage de roue (19) ou du rail (21) sur lequel on fait tourner la roue (3) respective du véhicule sur rails pendant le contrôle.

3. Méthode selon la revendication 2, caractérisée en ce que, pour contrôler l'essieu monté (1) du véhicule sur rails dans des conditions de déplacement en courbe, on induit par la zone d'essieu d'une des roues (3) du véhicule sur rails une force axiale au point de contact au sol de ladite roue (3) tandis qu'une force axiale supplémentaire est simultanément induite au point decontact au sol de l'autre roue (3) du véhicule sur rails par le bandage de roue (19) ou par le rail (21) sur lequel on fait tourner l'autre roue (3) du véhicule sur rails.

4. Méthode selon la revendication 2, caractérisée en ce que, pour contrôler l'essieu monté (1) du véhicule sur rails dans des conditions de déplacement sur un changement de voies, on induit par la zone d'essieu d'une des roues (3) du véhicule sur rails une force axiale au point de contact au sol de ladite roue (3) tandis qu'aucune force axiale supplémentaire n'est induite à ce point de contact au sol par le bandage de roue (19) ou par le rail (21) et qu'alternativement par rapport à cela aucune force axiale n'est induite par la zone d'essieu de cette roue (3) du véhicule sur rails au point de contact au sol de ladite roue (3) lorsqu'une force axiale supplémentaire est induite par le rail (21) ou par le bandage de roue (19) audit point de contact au sol de la roue.

5. Méthode selon l'une des revendications 1 à 4, caractérisée en qu'on teste en outre le frein (4), prévu sur l'essieu monté (1) du véhicule sur rails, en induisant des forces de freinage au point de contact au sol des roues.

6. Dispositif pour tester des roues de véhicule sur rails, avec lequel on teste l'ensemble d'un essieu monté (1) de véhicule sur rails qui comprend au moins un axe (2) de véhicule sur rails et au moins des roues (3) de véhicule sur rails montées à ses extrémités, par induction de forces radiales et/ou axiales au point de contact au sol des roues, les forces radiales étant induites au choix soit par la zone d'essieu d'une des deux roues (3) du véhicule sur rails soit par les deux roues (3) du véhicule sur rails, dispositif comprenant:

(a) un dispositif de fixation (10; 45) pour fixer en rotation l'essieu monté de véhicule sur rails,

(b) un premier dispositif d'application de charge radiale (14) relié à la zone d'essieu d'une des roues (3) du véhicule sur rails et un deuxième dispositif d'application de charge radiale (14) relié à la zone d'essieu de l'autre roue (3) du véhicule sur rails et

(c) un dispositif d'application de charge axiale (28) pour appliquer une force axiale, caractérisé en ce

(d) qu'il est prévu tout autour de chaque roue (3) du véhicule sur rails un tambour (18; 37) disposé de manière telle que la roue (3) du véhicule sur rails peut être amenée en contact de roulement, au moyen de son bandage de roue (19), avec un rail (21) appliqué sur la surface périphérique intérieure (20) du tambour (18; 37),

(e) qu'il est prévu un dispositif d'entraînement (43) pour faire tourner le tambour (18; 37) et

(f) que le dispositif d'application de charge axiale (28) est relié à l'axe (2) de l'essieu monté (1) de véhicule sur rails soit directement soit indirectement au moyen d'une fixation d'application de charge (45) dans laquelle est maintenu l'essieu monté (1) de véhicule sur rails.

7. Dispositif selon la revendication 6, caractérisé en ce qu'il est prévu au moins un dispositif d'application de charge axiale supplémentaire (13) pour induire une force axiale supplémentaire au point de contact au sol d'au moins une des roues (3) du véhicule sur rails, ledit dispositif (13) étant couplé au bandage de roue (19) ou au rail (21) d'au moins une roue (3) du véhicule sur rails pour appliquer la force axiale supplémentaire.

8. Dispositif selon la revendication 7, caractérisé en ce qu'il est prévu pour chacune des deux roues (3) du véhicule sur rails un dispositif séparé d'application de charge axiale supplémentaire (31).

9. Dispositif selon la revendication 6, 7 ou 8, caractérisé en ce qu'il est prévu pour chacune des deux roues (3) du véhicule sur rails un tambour séparé (18; 37).

10. Dispositif selon l'une des revendications 6 à 9, caractérisé en ce que le tambour commun prévu pour les deux roues (3) du véhicule sur rails ou le tambour séparé (18) prévu respectivement pour chacune des deux roues (3) du véhicule sur rails est monté au moyen d'un palier de tambour (25) disposé sur toute la périphérie dudit tambour, de préférence au moyen d'un palier hydrostatique ou électromagnétique et le tambour est pour l'essentiel ouvert en direction axiale (figure 1).

11. Dispositif selon l'une des revendications 6 à 9, caractérisé en ce que le tambour commun, axialement ouvert sur un côté, prévu pour les deux roues (3) du véhicule sur rails ou le tambour séparé (37) prévu respectivement pour chacune des deux roues (3) du véhicule sur rails est monté au moyen de son axe d'entraînement rotatif (39), les tambours séparés (37), disposés de manière coaxiale, étant ouverts axialement sur leurs côtés se faisant face (figure 2).

12. Dispositif selon la revendication 11, caractérisé en ce que le tambour commun ou les tambours séparés (37) peuvent être poussés ou déplacés en direction axiale (figure 2).

13. Dispositif selon la revendication 11 ou 12, caractérisé en ce que, lorsqu'on utilise deux tambours séparés (37), chaque roue (3) du véhicule sur rail est maintenue à l'extrémité respective de l'axe du véhicule sur rails au moyen d'une fixation d'application de charge séparée (45) qui est reliée à un dispositif de maintien et de transfert de force (47), guidé de manière mobile verticalement et parallèlement à l'axe (2) de véhicule sur rails, qui est lui-même couplé au dispositif d'application de charge axiale et radiale (14, 28) (figures 2 à 5).

14. Dispositif selon l'une des revendications 6 à 13, en particulier selon la revendication 10, caractérisé en ce que le dispositif d'application de charge axiale supplémentaire (31) est directement couplé au bandage (19) de la roue (3) du véhicule sur rails de préférence au moyen d'une ou plusieurs roulettes (33).

15. Dispositif selon l'une des revendications 6 à 13, en particulier selon la revendication 11, 12 ou 13, caractérisé en ce que le dispositif d'application de charge axiale supplémentaire (31) est couplé au tambour (37) de préférence au moyen d'un palier de traction-compression (48) (figure 2).

16. Dispositif selon l'une des revendications 6 à 15, en particulier selon la revendication 10, caractérisé en ce que le dispositif d'application de charge axiale (28) est directement couplé à l'axe (2) de véhicule sur rails de préférence au moyen d'un palier de traction-compression (29) (figure 1).

17. Dispositif selon l'une des revendications 6 à 16, caractérisé en ce que des rails à gorge ou organes de voie de roulement (22) comportant des pièces d'écartement (23) séparées sont prévus en tant que rails (21) pour induire des forces axiales négatives.

## Claims

1. Method of testing rail vehicle wheels (3), whereby a whole rail vehicle wheel set (1), which comprises at least one rail vehicle axle (2) and rail vehicle wheels (3) mounted at least on its ends, is tested by inducing radial and/or axial forces in the wheel standing point, and the radial forces are induced selectively via the wheel axle region of one of the two rail vehicle wheels (3) or of both rail vehicle wheels (3), characterised in that for testing under operationally similar load conditions the rail vehicle wheel set is rotated by making the rail vehicle wheels (3) thereof engage in rolling with rotating rail rings (21) and by inducing the axial forces selectively via the wheel axle region of one of the two rail vehicle wheels (3) or of both rail vehicle wheels (3).

2. Method according to claim 1, characterised in that in addition to the axial forces induced via the rail vehicle axle (2), additional axial forces are induced in the wheel standing point of one rail vehicle wheel (3) or both rail vehicle wheels (3) via the wheel tyre (19) or via the rail (21), on which the rail vehicle wheel (3) concerned is made to run during testing.

3. Method according to claim 2, characterised in that for testing the rail vehicle wheel set (1) during travel on bends via the wheel axle region of the one rail vehicle wheel (3), an axial force is induced in its wheel standing point, whilst at the same time additional axial forces are induced in the wheel standing point of the other rail vehicle wheel (3) via the wheel tyre (19) or via the rail (21), on which the other rail vehicle wheel (3) is made to run during testing.

4. Method according to claim 2, characterised in that for testing the rail vehicle wheel set (1) under conditions of travel on soft ground, an axial force is induced in the wheel standing point of the one rail vehicle wheel (3) via the wheel axle region, whilst no additional axial force is induced in this wheel standing point via the wheel tyre (19) or the rail (21), and in that in alternation therewith, no axial force is induced in its wheel standing point via the wheel axle region of this rail vehicle wheel (3), whilst an additional axial force is induced in this wheel standing point via the rail (21) or the wheel tyre (19).

5. Method according to one of claims 1 to 4, characterised in that furthermore the brake (4) provided on the rail vehicle wheel set (1) is tested by the induction of braking forces in the wheel standing point.

6. Apparatus for testing rail vehicle wheels, in which a whole rail vehicle wheel set (1), which comprises at least one rail vehicle axle (2) and rail vehicle wheels (3) mounted at least on its ends, is tested by inducing radial and/or axial forces in the wheel standing point, and the radial forces are induced selectively via the wheel axle region of one of the two rail vehicle wheels (3) or of both rail vehicle wheels (3), comprising:

(a) a mounting device (10; 45) for the rotary fixing of the rail vehicle wheel set;

(b) a first radial load device (14) connected to the wheel axle region of the one rail vehicle wheel (3) and a second radial load device (14) connected to the wheel axle region of the other rail vehicle wheel (3); and

(c) an axial load device (28) for applying an axial force;

characterised in that

(d) a drum (18; 37) is provided, mounted around each rail vehicle wheel (3) in such a manner that the rail vehicle wheel (3) can be brought into rolling engagement via its tyre (19) with a rail (21) mounted on the inner circumferential surface (20) of the drum (18; 37);

(e) a drive mechanism (43) is provided for rotating the drum (18; 37); and

(f) the axial load device (28) is connected to the axle (2) of the rail vehicle wheel set (1) either direct or via a load mounting (45), in which the rail vehicle wheel set (1) is mounted.

7. Apparatus according to claim 6, characterised in that at least one additional axial load device (31) is provided for inducing an additional axial force in the wheel standing point of at least one of the two rail vehicle wheels (3), and is coupled to the wheel tyre (19) or to the rail (21) of at least one of the rail vehicle wheels (3) in order to apply the additional axial force.

8. Apparatus according to claim 7, characterised in that a separate additional axial load device (31) is provided for each of the two rail vehicle wheels (3).

9. Apparatus according to claim 6, 7 or 8, characterised in that a separate drum (18; 37) is provided for each of the two rail vehicle wheels (3).

10. Apparatus according to one of claims 6 to 9, characterised in that the drum common to both rail vehicle wheels (3) or the separate drum (18) provided in each case for each of the two rail vehicle wheels (3) is mounted by means of a drum bearing (25) mounted around its circumference, preferably by means of a hydrostatic or electromagnetic bearing, and the drum is substantially open in the axial direction (Figure 1).

11. Apparatus according to one of claims 6 to 9, characterised in that the drum common to both rail vehicle wheels (3) and axially open on one side, or the separate drum (37) provided for each of the two rail vehicle wheels (3) respectively, is mounted via its rotary drive shaft (39), in which case the separate, coaxially mounted drums (37) are open in the axial direction on their mutually associated sides (Figure 2).

12. Apparatus according to claim 11, characterised in that the common drum or the separate drums (37) are displaceable or movable in the axial direction (Figure 2).

13. Apparatus according to claim 11 or 12, characterised in that when two separate drums (37) are used, each rail vehicle wheel (2) is mounted via the associated end of the rail vehicle axle (2) by means of a separate load mounting (45), which is connected to a mounting and power transmission device (47) guided movably perpendicular and parallel to the rail vehicle axle (2) and coupled to the axial and radial load device (14, 28).

14. Apparatus according to one of claims 6 to 13, in particular claim 10, characterised in that the additional axial load device (31) is coupled direct, preferably via one or more rollers (33), to the tyre (19) of the rail vehicle wheel (3) (Figure 1).

15. Apparatus according to one of claims 6 to 13, in particular to claim 11, 12 or 13, characterised in that the additional load device (31) is coupled to the drum (37), preferably via a tension-compression axial bearing (48) (Figure 2).

16. Apparatus according to one of claims 6 to 15, in particular according to claim 10, characterised in that the axial load device (28) is coupled direct, preferably via a tension compression axial bearing (48) (Figure 1).

17. Apparatus according to one of claims 6 to 16, characterised in that as rails (21), in order to induce negative axial forces, grooved rails or rail bodies (22) are provided with separate spacing members (23).

# FIG. 1

# FIG. 2

EP 0 232 855 B1

## FIG. 3

FIG. 5

FIG. 4

FIG. 6

FIG. 7

FIG. 8

FIG. 9